# EUROPEAN PATENT APPLICATION

(11) **EP 1 530 902 A1**
(43) Date of publication of application: **18.05.2005**
(21) Application number: 04025218.1
(22) Date of filing: 22.10.2004
(51) Int. Cl.: A21B 3/15

(54) **Cooking plate particularly for food ovens**

(30) Priority: 14.11.2003 IT PD20030105 U
(71) Applicant: Unox S.p.A., 35010 Vigodarzere (Padova) (IT)
(72) Inventor: Franzolin, Enrico, 35010 Vigodarzere (Padova) (IT)
(74) Representative: Modiano, Guido, Dr.-Ing.

(57) **Abstract**

A cooking plate particularly for food ovens, comprising, on the face (11) arranged below an upper supporting surface (12) for food to be cooked, a plurality of protruding elements (13) for increasing heat exchange by conduction. The protruding elements (13) are constituted by axially elongated studs (14) whose axis is substantially perpendicular to the upper supporting surface (12). The axially elongated studs (14) are frustum-shaped and taper downward.

## Description

The present invention relates to a cooking plate particularly for food ovens.

Currently known cooking plates for food ovens comprise, on their face that lies below an upper surface for supporting food to be cooked, a plurality of protruding elements that are suitable to increase heat exchange, mainly by convection.

These protruding elements are generally fin-shaped and are arranged in various manners so as to form channels for the flow of the hot air streams emitted by appropriately provided heating means, inside a convection oven in which said cooking plate is arranged.

Said fin-shaped elements, by facilitating the passage of the streams of hot air, privilege the exchange of heat between the cooking plate and the environment by convection rather than by conduction.

The aim of the present invention is to provide a cooking plate particularly for food ovens that has an increased heat conduction capacity with respect to known types of cooking plate.

Within this aim, an object of the present invention is to provide a cooking plate that can be installed easily in ovens, particularly for food, of a known type.

Another object of the present invention is to provide a cooking plate particularly for food ovens that can be manufactured cheaply with known systems and technologies.

This aim and these and other objects that will become better apparent hereinafter are achieved by a cooking plate particularly for food ovens, of the type that comprises, on the face arranged below an upper supporting surface for food to be cooked, a plurality of protruding elements that are suitable to increase heat exchange, characterized in that said protruding elements are constituted by axially elongated studs whose axis is substantially perpendicular to said upper supporting surface, said studs being suitable for heat exchange by conduction.

Advantageously, said axially elongated studs are frustum-shaped and taper downward.

Further characteristics and advantages of the present invention will become better apparent from the following detailed description of an embodiment thereof, illustrated by way of non-limiting example in the accompanying drawings, wherein:
Figure 1 is a perspective view, taken from below, of a cooking plate according to the invention;
Figure 2 is a sectional side view of a stud of a plate according to the invention;
Figure 3 is a side view showing a detail of a plate according to the invention;
Figure 4 is a bottom plan view of a cooking plate according to the invention;
Figure 5 is a sectional view, taken along the line V-V of Figure 4, of a cooking plate according to the invention.

With reference to the figures, a cooking plate according to the invention is generally designated by the reference numeral 10.

In the following description, indication of the relative position of the described elements, such as, below, upper, downward etc... is intended to refer to an arrangement of the plate while it is in normal use. Clearly such indication is for purposes of description only, since the positions may change upon a different arrangement of the plate.

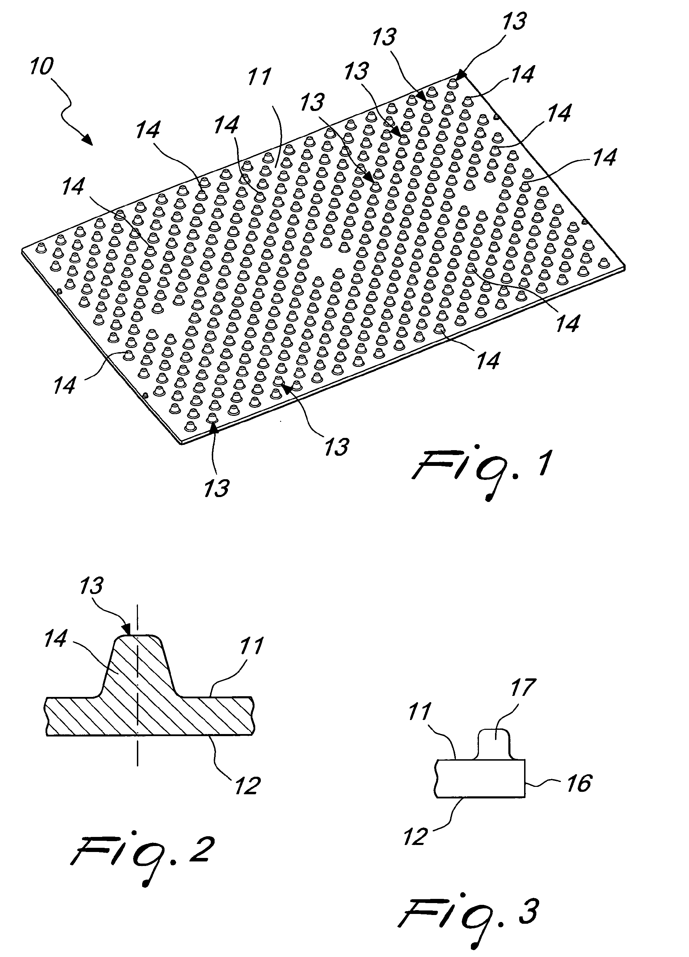

The plate 10 comprises a plurality of protruding elements 13 on its face 11 that lies, in use, below an upper supporting surface 12 shown in a lower position in Figures 2, 3 and 5, where the plate is illustrated upside down, for food to be cooked.

The protruding elements 13 increase heat exchange by conduction.

The protruding elements 13 are constituted by axially elongated studs 14, whose axis is substantially perpendicular to the upper supporting surface 12.

The axially elongated studs 14 are substantially frustum-shaped and, in use, taper downward.

The studs 14 are arranged along parallel and equidistant rows 15, so as to form a dense and orderly grid.

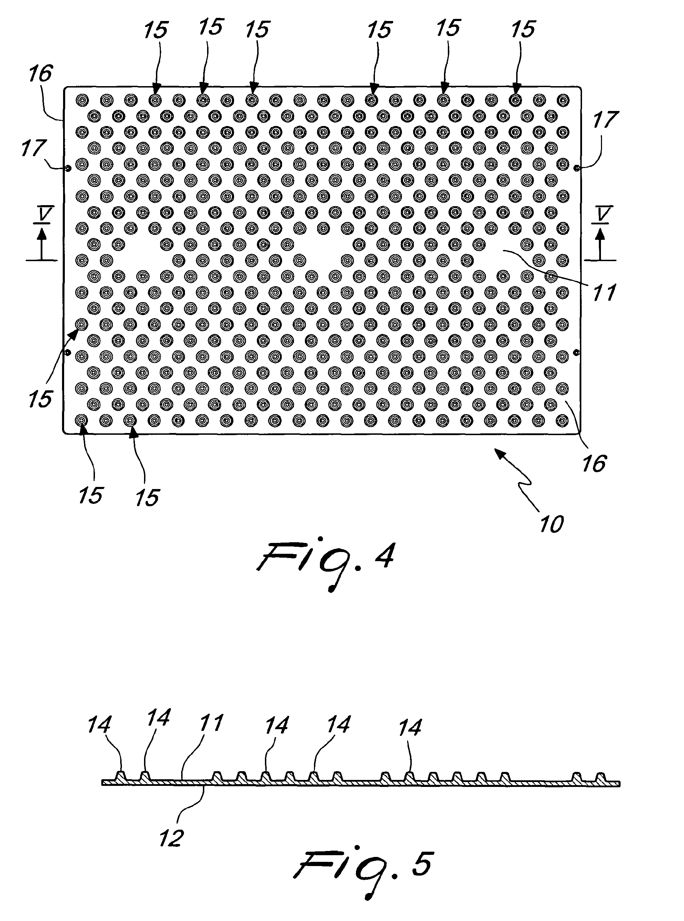

The arrangement of the studs 14, shown in Figures 1 and 4, allows the flow of hot air streams, which differently from what occurs for the fin-like protruding elements of known plates is slowed by the plurality of studs 14.

Said slowing of the hot air streams proximate to the lower face of the plate 10 allows an accumulation of heat at the studs 14, and said studs, by increasing the exchange surface of the lower face 11, increase the absorption of heat from said streams.

In the embodiment described here, the plate 10 is rectangular and has, below its edges 16, at least two feet 17 for resting on appropriately provided supports, which are not shown for the sake of simplicity.

Advantageously, the studs 14 are monolithic with the rest of the plate 10.

The plate 10 is equally advantageously obtained by pressing metallic material.

In practice it has been found that the invention thus described solves the problems noted in known types of improved cooking plate particularly for food ovens.

In particular, the present invention provides a cooking plate particularly for food ovens that has an increased heat conduction capacity with respect to known types of cooking plate.

Moreover, the present invention provides a cooking plate particularly for food ovens that can be installed easily in known kinds of oven, particularly food ovens.

Moreover, the present invention provides a cooking plate that can be manufactured cheaply with known systems and technologies.

The invention thus conceived is susceptible of modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Utility Model Application No. PD2003U000105 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cooking plate, particularly for food ovens, of the type that comprises, on the face (11) arranged below an upper supporting surface (12) for food to be cooked, a plurality of protruding elements (13) that are suitable to increase heat exchange, **characterized in that** said protruding elements (13) are constituted by axially elongated studs (14) whose axis is substantially perpendicular to said upper supporting surface (12), said studs (14) being suitable for heat exchange by conduction.

2. The cooking plate according to claim 1, **characterized in that** said axially elongated studs (14) are frustum-shaped and taper downward.

3. The cooking plate according to one or more of the preceding claims, **characterized in that** said studs (14) are arranged along parallel and equidistant rows (15).

4. The cooking plate according to one or more of the preceding claims, **characterized in that** it is rectangular.

5. The cooking plate according to one or more of the preceding claims, **characterized in that** said studs (14) are monolithic with said plate (10).
